# EUROPEAN PATENT SPECIFICATION

(11) **EP 4 700 078 B1**
(45) Date of publication and mention of the grant of the patent: **12.08.2026**
(21) Application number: 24195121.9
(22) Date of filing: 19.08.2024
(51) Int. Cl.: C08J 11/14, B09B 3/45, B09B 3/70, C07C 51/16, C07C 53/00, C07C 53/08, C07C 55/02, C08F 8/06

(54) **PROCESS AND SYSTEM FOR THE CONVERSION OF A PLASTIC FEEDSTOCK**
VERFAHREN UND SYSTEM ZUR UMWANDLUNG EINES KUNSTSTOFFROHMATERIALS
PROCÉDÉ ET SYSTÈME DE CONVERSION D'UNE CHARGE D'ALIMENTATION EN PLASTIQUE

(43) Date of publication of application: 25.02.2026
(73) Proprietor: Radical Dot GmbH, 80796 München (DE)
(72) Inventor: KREMER, Alexandre, 86000 Poitiers (FR); WAGNER, Andreas, 80796 Munich (DE)
(74) Representative: Wallinger Ricker Schlotter PartGmbB

(56) References cited:
- WO-A1-2023/118135
- WO-A2-02/10228
- DE-A1- 2 035 706
- GB-A- 1 388 802
- JP-A- 2023 144 614
- US-B2- 11 220 586

## Description

### Field of the Invention

The present invention is directed to a process for the conversion of a plastic feedstock, in particular to obtain a product mixture comprising at least one carboxylic acid having a number of carbon atoms selected from the range of 2-12.

### Background

Today, a mere ~10% of plastic is recycled globally, partly due to the high costs and complexities of waste separation. The low value of plastic renders common recycling processes economically challenging, limiting viability to only a few types such as PET bottles.

Most industry players that want to incorporate recycled plastic into their products have had to concentrate on recycling pristine and sorted single plastic streams, which can be both costly to acquire and limited in available volume. The associated sorting process represents a substantial financial burden for both recycling and chemical companies. Mechanical recycling, the prevailing method in use today, relies on specific feedstocks, such as clear PET bottles, and results in materials that often fall short in performance requirements, particularly for high performance and contact sensitive applications. This limitation poses a barrier to achieving a fully circular economy solely through mechanical recycling technology.

A variety of new technologies have emerged under the umbrella term "chemical recycling". All these technologies enable production of virgin-quality plastic building blocks, effectively addressing performance concerns. However, these technologies focus on a limited range of feedstocks with low tolerance for contaminants.

As of today, there are no cost competitive, at scale technology that is feedstock agnostic meaning that is able to recycle complex, mixed and contaminated plastic waste streams without high collection or sortation cost. With increasing policy pressure (e.g., PPWR in Europe, Global Plastic Treaty), upcoming recycled content targets are likely to become the norm increasing the pressure to find solutions to this global issue.

The catalytic oxidation of plastic waste feedstock, which may include mixed polymers, has been reported previously in WO 02/10228 A1, WO 2023/118135 A1 and WO 2022/133041 A1 but yielded complex carboxylic acid mixtures that were hard to separate and valorise.

GB 1 388 802 A discloses a process for the preparation of mixtures of aliphatic mono- and dicarboxylic acids and, possibly, polycarboxylic acids, especially mixtures having an average molecular weight in the range from 100 to 10,000.

JP 2023 144614 A discloses an oxidative decomposition method of polyolefin.

US 11 220 586 B2 discloses methods for the decomposition of contaminated plastic waste.

### Summary

The above-mentioned drawbacks are solved by the present invention as set forth in the independent claims.

According to a first aspect, the present invention is directed to process for the conversion of a plastic feedstock, the process comprising the following steps:
(a) decomposing the plastic feedstock by catalytic oxidation to obtain a mixture of molecular fragments of the plastic feedstock in a first reactor unit, wherein the catalytic oxidation involves a catalyst, the catalyst comprising a transition metal salt, comprising cobalt, , zirconium and/or manganese; wherein the catalyst further contains bromide, wherein step (a) is carried out in a solvent consisting of acetic acid, and wherein step (a) comprises an oxidation agent, the oxidation agent being selected from the group consisting of air, oxygen, hydrogen peroxide, nitric acid, nitrous oxide, ozone or combinations thereof,; and
(b) converting at least a portion of the mixture of molecular fragments obtained in step (a) by a further oxidation in a solvent consisting of water and above atmospheric pressure in a second reactor unit to obtain a product mixture comprising at least one carboxylic acid having a number of carbon atoms selected from the range of 2-12, wherein the at least one carboxylic acid is selected from the group consisting of acetic acid, succinic acid, benzoic acid, terephthalic acid, glutaric acid adipic acid or combinations thereof, wherein step (b) is carried out at a temperature ranging from about 180 °C to about 300°C, and wherein the term about has the meaning of a tolerance range of ± 10%.

### Technical Effects of the Invention

The technical effects of the present invention, as set forth in the aspects and claims disclosed herein, are described in the following but not meant to be limiting or conclusive.

It was surprisingly found that the combination of steps (a) and (b) described enable an efficient process for an oxidative conversion of a plastic feedstock, even if contaminated with other waste streams, to obtain valuable products including carboxylic acids, especially carboxylic acids with a carbon number ranging from 2 to 12, such as acetic acid, succinic acid, glutaric acid, benzoic acid, terephthalic acid, and adipic acid, in sufficient carbon yields. These valuable products can for example in turn be used e.g. for further utilization to high-value chemicals (e.g. olefins, alcohols, amides, esters, etc.) in acceptable yields and with reduced carbon dioxide production. Even more surprisingly, it was found that significant amounts of carbon monoxide and methane may be produced by the process.

It was also surprisingly found that the process according to the present invention, in particular because the combination of steps (a) and (b) is feedstock-agnostic, meaning that the nature of the converted plastic, such as containing PE, or PP, etc., is uncritical and no large additional sortation and collection costs of the plastic are occurring for the process. In other words, an efficient recycling of waste plastic feedstocks can be provided with the process and systems according to the present invention.

Furthermore, it has been surprisingly found that the combination of steps (a) and (b) allows recycling of plastic feedstocks, such as mixed plastic waste, at low temperatures compared to existing technologies such as pyrolysis and gasification.

Further details about the technical effects can be found in the sections "Detailed Description" and "Examples" herein.

### Brief Description of the Figures

Figure 1 shows an illustration of an implementation of the process according to the present invention.
Figure 2 shows product species resulting from various process steps.

### Definitions

Unless defined otherwise, all terms and expressions used herein comply with the technical understanding of a person skilled in the art.

As used herein, the term "carboxylic acid" is broadly understood and encompasses hydrocarbons, such as aliphatic and/or aromatic hydrocarbons, with at least one carboxyl group chemically bound thereto. Carboxylic acid(s) comprise monocarboxylic acid(s), such as acetic acid and/or benzoic acid, dicarboxylic acids, such as succinic acid and/or adipic acid and/or terephthalic acid, and/or tri- or higher valent carboxylic acids. Preferably, the carboxylic acid(s) as disclosed herein do not have further functional groups besides carboxylic groups bound to aromatic and/or aliphatic hydrocarbons. Optionally, carboxylic acid(s) consist of monocarboxylic acid(s) and/or dicarboxylic acid(s).

As used herein, "carboxyl groups" are functional groups with a carbon atom double-bonded to an oxygen atom and single bonded to a hydroxyl group.

As used herein, the term "product mixture" is broadly understood as a mixture of molecules resulting from the conversion of a plastic feedstock according to the present invention obtained after steps (a) and (b) as long as the product mixture comprises at least one carboxylic acid, such as a monocarboxylic acid and/or a dicarboxylic acid, having a number of carbon atoms selected from a range of 2 to 12, preferably 2 to 8. The at least one carboxylic acid is selected from the group consisting of acetic acid, succinic acid, benzoic acid, terephthalic acid, glutaric acid adipic acid or combinations thereof. Furthermore, it is not excluded that, in addition to the least one carboxylic acid having a number of carbon atoms selected from a range of 2 to 12, the product mixture might also encompass a further carboxylic acid, such as a dicarboxylic acid, having a carbon number selected from the range of 4 to 20.

As used herein, the term "above atmospheric pressure" is broadly understood and denotes the difference between the total pressure in the reactor and the atmospheric pressure of the location where the reactor is situated. Pressure is typically generated by compressors or other means known to the skilled person. Also, suitable instruments for measuring pressure are well-known to the skilled person.

As used herein, the term "plastic feedstock" (or interchangeably denoted as "waste plastic feedstock") is broadly understood and may contain various solid waste polymers selected from the group consisting of polyethylene (PE), polypropylene (PP), polyethylene terephthalate (PET), acrylonitrile butadiene styrene (ABS), poly(vinylidene chloride) (PVC), polystyrene (PS), polyurethanes (PUR), polycarbonate (PC), polyamides (PA), synthetic rubber (SR), polyethylene naphthalate, polyolefin, polybutylene terephthalate, any synthetic polymeric material, any copolymers thereof, or any combination thereof. The plastic feedstock may be homogeneous in view of the waste plastic it contains. Alternatively, the plastic feedstock may be heterogeneous and contain different waste plastics. The plastic feedstock may not exclusively contain a solid waste polymer but may be contaminated by other waste streams, such as paper, organic waste, natural fibres, or natural polymers as well as additives. The content of the solid waste polymers with respect to the total weight of the plastic feedstock may be at least 50 w%, at least 60 w%, or at least 80 w%.

As used herein, the term "temperature" usually denotes the average temperature in a reactor which is measured by suitable means known to the skilled person.

As used herein, the term "pressure" is broadly understood and usually relates to the total pressure of a system, such as a reactor, which is the sum of the partial pressures of all components in the reactor.

As used herein, the term "mixture of molecular fragments" is broadly understood and encompasses a mixture of organic molecules which are obtained by the decomposition of the solid waste polymers in the plastic feedstock. The mixture of molecular fragments is the product of step (a). Typically, the mixture of molecular fragments may already contain C2-C12 carboxylic acids, however, in a greater amount the mixture of molecular fragments may contain oligomers as defined hereinbelow.

As used herein, the term "solvent", the term solvent is broadly understood and denotes an excess amount of fluid, typically liquid, as a part of a reaction mixture. Typically, a solvent is more than 50 w% based on a total amount of reaction mixture. According to the present invention, the solvent consists of acetic acid for step (a) and water for step (b).

As used herein, the term "decomposition" or "decomposing", means the degradation of a larger constituent of a plastic, such as a polymer chain into smaller molecular fragments, by virtue of oxygen and temperature and optionally by using a catalyst.

As used herein, the term "reaction mixture" is the mixture of starting materials in step (a) and (b), respectively. In other words, step (a) has a first reaction mixture (a) and step (b) has a second reaction mixture (b).

As used herein, the term "converting" or "convert", is a chemical reaction.

As used herein, the term "comprising", is not limiting to the constituents but is an open language stating that further constituents, even if not stated explicitly, might be encompassed. As an example, composition comprising A does not exclude that an additional component "B" might be included.

As used herein, the term "about" used in connection with a number has the meaning of a tolerance range of ± 10%; in particular ± 5 % of that number.

As used herein, the term "oligomer(s)" denote a part of the mixture of molecular fragments. An oligomer is a molecular fragment of which the molecular weight is lower than the respective starting polymer and also a product of the decomposition in step (a). By definition, an oligomer excludes carboxylic acid having a number of carbon atoms selected from the range of 2-12. The oligomers are usually not part of the product mixture of step (b), as they are further converted in step (b). An oligomer is characterized by a lower molecular weight than the initial polymer it results from.

The terms weight percent "w%" or "wt.-%" or mass percent "Ma.-%" may be used interchangeably herein.

As used herein, the term "reactor unit" is a reactor on its own and might also contain the necessary downstream and upstream equipment such as conduits and possible separators. Also the use of condensers is possible in connection with a reactor unit.

As used herein, "upstream" is a relative term describing an earlier stage or a preceding position in the process or process plant, e.g. of a process unit, relative to the direction of the stream of the process components, i.e. plastic feedstock and mixture of molecular fragments, through the process and system, and, therefore, takes the usual meaning in the field. As a non-limiting example, the first reactor unit, i.e. in which step (a) takes place, is arranged upstream of the second reactor unit, i.e. in which step (b) takes place.

As used herein, "downstream" is a relative term describing a later stage or a subsequent position within the process or process plant, e.g. of a process unit, relative to the direction of the stream of the process components, i.e. plastic feedstock and mixture of molecular fragments, through the process and system, and, therefore, takes the usual meaning in the field. As a non-limiting example, the second reactor unit, i.e. in which step (b) takes place, is arranged downstream of the first reactor unit, i.e. in which step (a) takes place.

### Detailed Description

### Process for the conversion of a plastic feedstock

According to a first aspect, the present invention is directed to process for the conversion of a plastic feedstock, the process comprising the following steps:
(a) decomposing the plastic feedstock by catalytic oxidation to obtain a mixture of molecular fragments of the plastic feedstock in a first reactor unit, wherein the catalytic oxidation involves a catalyst, the catalyst comprising a transition metal salt, comprising cobalt, zirconium and/or manganese; wherein the catalyst further contains a source of bromide, wherein step (a) is carried out in a solvent consisting of acetic acid, and wherein step (a) comprises an oxidation agent, the oxidation agent being selected from the group consisting of air, oxygen, hydrogen peroxide, nitric acid, nitrous oxide, ozone or combinations thereof; and
(b) converting at least a portion of the mixture of molecular fragments obtained in step (a) by a further oxidation in a solvent consisting of water and above atmospheric pressure in a second reactor unit to obtain a product mixture comprising at least one carboxylic acid having a number of carbon atoms selected from the range of 2-12, , wherein the at least one carboxylic acid is selected from the group consisting of acetic acid, succinic acid, benzoic acid, terephthalic acid, glutaric acid adipic acid or combinations thereof, wherein step (b) is carried out at a temperature ranging from about 180 °C to about 300°C and wherein the term about has the meaning of a tolerance range of ± 10%.

The advantages, i.e. effects, of the process are set forth in the section "Technical Effects of the Invention". Further technical effects will be set forth hereinbelow.

The process of the present invention is an oxidative conversion of a plastic feedstock, defined hereinbelow, to smaller molecules, such as acetic acid and/or succinic acid and/or adipic acid, which can in turn be converted to further important building blocks such as olefines. Hence the process is useable for the recycling of a plastic feedstock or a plastic waste feedstock.

Prior to step (a), the plastic feedstock as obtained can be pretreated and sorted. For example drying of the plastic feedstock to a certain desired moisture level can be carried out and/or physically sorting out certain components. In addition, the plastic feedstock may be ground to a certain particle size, such as a powder; or the plastic feedstock may be shredded or pelletized. In addition, but also independently of the pretreatment and sorting, the plastic feedstock may be mixed with a solvent prior to step (a), i.e. the solvent to be used in step (a). In particular, a slurry prepared by such mixing may be obtained in a mixing vessel prior to the first reactor unit of step (a). In said mixing vessel, the solvent and a recycled liquid containing the catalyst and/or the catalyst as such may be mixed.

Step (a) is a catalytic oxidation according to which an oxidative decomposition of the plastic feedstock into a mixture of smaller molecular fragments, being smaller than the molecules in the plastic feedstock, in particular smaller than the polymers in the plastic feedstock, takes place. Catalysts and conditions in this step are described hereinbelow. Examples of catalysts according to claim 1, which can be used in step (a) are disclosed in WO 02/10228 A1.

Step (a) is carried out using a solvent as defined herein. In particular, step (a) may be carried out at a pressure above atmospheric pressure. Suitable pressure ranges for step (a) are disclosed herein. In such case, the pressure above atmospheric pressure is the total pressure. The total pressure might be composed of the oxidant, if in gas form entirely, such as if pure oxygen gas is used, or of the partial pressure of an oxidant and further inert gas, such as if air is used. Furthermore, the total pressure might also be composed of the partial pressure caused by the solvent at a respective temperature.

A content of the plastic feedstock with respect to the total mass of the reaction mixture in step (a) may be ranging from about 0.5 w% to about 40 w%, preferably about 5 w% to about 40 w%. The remaining parts of the reaction mixture, being especially liquid when the gaseous reactants are not counted in, may for example be the solvent or solvent mixture and a catalysts. Additionally or alternatively, the content of the solvent with respect to the total mass of the reaction mixture in step (a) ranges from about 60 w% to about 95 w%. The term "reaction mixture of step (a)", whenever used herein refers to the reaction mixture which is input into the first reactor unit and does not take into account gases (neither dissolved nor in gas phase), unless stated otherwise.

Step (a) is performed in a first reactor unit, the first reactor unit being different from the second reactor unit in which step (b) is performed. The first and second reactor units are spatially separated reactors. Steps (a) and (b) can, therefore, be performed simultaneously.

Step (b) is an oxidation of at least a portion of these smaller molecular fragments obtained in step (a) into a product mixture comprising at least one carboxylic acid having a number of carbon atoms selected from the range of 2-12, in particular 2 to 8, wherein the at least one carboxylic acid is selected from the group consisting of acetic acid, succinic acid, benzoic acid, terephthalic acid, glutaric acid adipic acid or combinations thereof. Essentially, it has been found by the inventors that step (b) essentially does not break down these carboxylic acids having a number of carbon atoms selected from the range of 2-12. Non-limiting examples of these carboxylic acids are acetic acid, glutaric acid, succinic acid, adipic acid, benzoic acid, terephthalic acid or any combination thereof. Step (b) may follow subsequently to step (a) and the entire mixture of molecular fragments obtained in step (a) might be used for step (b). However, alternatively, parts of the mixture of molecular fragments might be separated after step (a) and before step (b) such that only a portion of the mixture of molecular fragments proceeds to step (b). A portion of the mixture of molecular fragments obtained in step (a) which may proceed to step (b) with respect to the total mass of the mixture of molecular fragments may range from about 1 w% to about 40 w%, preferably about 10 w% to about 30 w%. In particular, the portion of molecular fragments to be further used in step (b) depends upon the solubility of its components. If components are separated as solids at the reactor outlet, they are further used for said portion for the oxidation in step (b).

Step (b) takes place in water as a solvent and above atmospheric pressure. A pressure above atmospheric pressure is, among other factors, chosen in order to provide a proper dissolution of the oxidant in the solvent. The operating pressure of step (b), i.e. in the second reactor unit, is in particular achieved by gas pressure, e.g. by the total pressure. The total pressure might be composed of the oxidant, if in gas form entirely, such as if pure oxygen gas is used, or of the partial pressure of an oxidant and further inert gas, such as if air is used. Furthermore, the total pressure might also be composed of the partial pressure caused by the solvent at a respective temperature. Ranges for the pressure above atmospheric pressure in step (b) are set forth hereinbelow. Furthermore, or in addition, the pressure above atmospheric pressure might be achieved by the operating temperature and the corresponding contribution of the solvent on the total pressure at the respective temperature. Preferably, the solvent in step (b) may be only water or a mixture of water and acetic acid. A content of the solvent with respect to the total mass of the reaction mixture in step (b), i.e. in the second reactor unit, may range from about 50 w% to about 98 w%, preferably about 60 w% to about 85 w%. The reaction mixture in step (b), whenever mentioned herein, denotes the reaction mixture which is input into step (b) and takes into account gases with respect to the total mass of the reaction mixture in step (b). The content of the portion of molecular fragments with respect to the total mass of the reaction mixture in step (b) may range from about 0.1 w% to about 30 w%.

Without wishing to be bound by theory, it is assumed that the combination of step (a) yielding in essence larger molecular fragments than obtained in step (b) and the further conversion of these larger fragments in step (b) avoids oxidation to carbonated gases, such as carbon monoxide, carbon dioxide, and water to a large degree and yields the desired product mixture which can be easily further processed.

Step (b) may be carried out catalytically or non-catalytically. Steps (a) and (b) are performed in independent reactor units.

The hitherto unknown combination of steps (a) and (b) achieves the effects set forth in this specification.

Steps (a) and (b) can be each performed in suitable first and second reactor units for high pressure oxidation known to the skilled person. Steps (a) and (b) can be independently performed as batch, semibatch or continuous first and/or second reactor unit, i.e. in the corresponding suitable reactors.

Step (a) comprises an oxidation agent, the oxidation agent being selected from the group consisting of air, oxygen, hydrogen peroxide, nitric acid, nitrous oxide, ozone or combinations thereof. Preferably, the oxidation agent is air. In another preferred embodiment, the oxidation agent is oxygen. In a further embodiment, hydrogen peroxide is preferable. Also, one of the aforementioned agents may additionally be present as an initiator molecule. Such initiator molecule may be present in a content of less than about 2 mol%, preferably less than about 1 mol%, with respect to the total molar amount of the reaction mixture in step (a).

In certain embodiments, step (b) may comprise an oxidation agent, the oxidation agent being selected from the group consisting of air, oxygen, hydrogen peroxide, nitric acid, nitrous oxide, ozone or combinations thereof. Preferably, the oxidation agent is air. In another preferred embodiment, the oxidation agent is oxygen. In a further embodiment, hydrogen peroxide is preferable. In a further embodiment, hydrogen peroxide is preferable. Also one of the aforementioned agents may additionally be present as a initiator molecule. Such initiator molecule may be present in a content of less than about 2 mol%, preferably less than about 1 mol%, with respect to the total molar amount of the reaction mixture in step (b).

Alternatively, the foregoing embodiments with respect to the oxidation agents in step (a) and (b) may be combined with each other.

The catalytic oxidation of step (a) involves a catalyst, the catalyst comprising a transition metal salt, comprising cobalt, zirconium and/or manganese; wherein further the catalyst contains a source of bromine. In particular, the catalyst may be a homogenous catalyst. The catalyst contains a transition metal salt and bromide. The catalyst may include a combination of cobalt and manganese and a source of bromine, such as NaBr or HBr. Furthermore, the catalyst may include a combination of cobalt, manganese, vanadium and zirconium and a source of bromine, such as NaBr and HBr. In particular, the catalyst is a homogenous catalyst present in solution. However, heterogeneous catalysts may also be possible. Various catalysts which might be used in step (a) are disclosed in WO 02/10228 A1. A catalyst loading, meaning a content of catalyst with respect to a total mass of the reaction mixture in step (a) ranges from about 0.1 w% to about 2 w%, preferably ranging from about 0.8 w% to about 1.2 w%.

In certain embodiments, the plastic feedstock comprises a solid waste polymer or a solid polymer. The solid (waste) polymer comprises polyethylene, polypropylene, polyethylene terephthalate (PET), acrylonitrile butadiene styrene (ABS), poly(vinylidene chloride), polystyrene, polyurethane, polycarbonate, polyamide, synthetic rubber, polyethylene naphthalate, polyolefin, polybutylene terephthalate, any synthetic polymeric material, any copolymers thereof, or any combination thereof. As already set forth above, the plastic feedstock may also contain a mixture of plastics, i.e. a combination of various solid waste polymers and further components from different sources. A non-limiting example of a plastic feedstock may contain about 30 w% to about 40 w% polyethylene, about 25 w% to about 35 w% polypropylene, about 1 w% to about 5 w% polyethylene terephthalate, about 1 w% to about 10 w% polystyrene, about 1 w% to about 10 w% polycarbonate, about 1 w% to about 10 w% polyurethane, about 1 w% to about 10 w% polyvinylchloride, about 1 w% to about 1 w% other polymers, about 1 w% to about 10 w% papers and organics, about 1 w% to about 10 w% inerts and about 0.5 to about 5 w% water with respect to a total mass of the plastic feedstock. Thus, a plastic feedstock might contain a mixture of solid waste polymers among other compounds such as set forth above. As set forth above, the process is feedstock-agnostic. Any possible plastic feedstock can be successfully converted to the desired products described elsewhere herein irrespective of their compositions by steps (a) and (b). For example organics may be converted to carbon dioxide, while chlorides, such as originating from polyvinylchloride, may be converted to chlorine gas, e.g. in step (a), which will be in turn converted to HCl. Such HCl can be removed by any means known to the skilled person. Furthermore, solid components resulting in steps (a) and/or (b) may simply be filtered off.

In certain embodiments, step (a) is carried out at a temperature ranging from about 100 °C to about 300 °C, optionally from about 150 °C to about 220 °C, and/or wherein step (a) is carried out at a pressure ranging from about 5 bar to about 100 bar, preferably from about 15 bar to about 30 bar, or from above atmospheric pressure to below 30 bar. As described above, the pressure might be the total pressure or a partial pressure of an oxidant component, the oxidant component is in gas form, such as oxygen.

Step (b) is carried out at a temperature ranging from about 180 °C to about 300°C and/or wherein step (b) may be operated at a pressure ranging from about 5 bar to about 100 bar preferably from about 15 to about 30 bar, or from above atmospheric pressure to below 30 bar. As described above, the pressure might be the total pressure or a partial pressure of an oxidant component, the oxidant component is in gas form, such as oxygen. Also components such as water as a solvent, at the respective temperature might contribute to a total pressure.

The temperatures of steps (a) and (b) are way lower than in known industrial processes such as gasification and pyrolysis. Therefore, the process according to the present invention may be operated in an energy efficient manner.

In certain embodiments, wherein the mixture of molecular fragments comprises at least one oligomer, or at least one carboxylic acid having a number of carbon atoms selected from the range of 2-22 or combinations thereof.

Step (a) is carried out using a solvent consisting of acetic acid.

In certain embodiments, the process further comprises the step of recycling at least a portion of a newly produced chemical output in the first reactor unit in step (a) from a downstream unit of the first reactor unit in step (a) and/or step (b) as a solvent back into step (a) to substitute a solvent depleted in step (a) or (b), the portion optionally comprising about 1 w% to about 10 w% of the consumed solvent based on a total mass of an input into the first reactor unit in step (a). The substitution of depleted solvent is possible in a unique manner, as solvent, typically in the form of acetic acid, is produced as the main output of the process. In other words, the overall process produces more solvent, in particular acetic acid, than consumed, e.g. by oxidation to carbon dioxide. This is in particular a valuable finding, as solvent oxidation in existing systems (e.g. the para-xylene oxidation to terephthalic acid) is a significant cost contribution for the overall process. Therefore, if for example acetic acid as a solvents needs to be recycled at a certain point of the process, but at this particular point of the process, acetic acid has been consumed, it can be replenished by parts of the acetic acid produced in the overall process. One example is the mixing of the pretreated and sorted plastic waste feedstock with the solvent before step (a).

In certain embodiments, step (a) comprises an inert gas being selected from the group consisting of carbon dioxide, nitrogen or a combination thereof. Without being bound by a theory, it is assumed that the use of carbon dioxide as an inert gas renders the process more efficient, as the chemical equilibrium for carbon dioxide produced in step (a) is shifted and the amount of newly produced carbon dioxide is reduced. In steps (a) and/or (b) inert gas might be added that an oxygen concentration in a headspace of the reactor may be below flammability limits of 8 w% oxygen with respect to the total mass of the gas. Alternatively the limiting oxygen concentration may be 9.6 w%.

In certain embodiments, the residence time in step (a) and/or step (b) is ranging from about 15 minutes to about 3 hours, preferably about 30 minutes to about 1 hour or about 1 hour to about 2 hours. Residence time, as used herein, may be determined, either in the first reactor unit in step (a) or in the second reactor unit in step (b), by measuring the time it takes for a given fluid to move through the reactor.

In certain embodiments, the plastic feedstock is contained in a reaction mixture in step (a), wherein content of the plastic feedstock with respect to the total mass of the reaction mixture is ranging from about 0.5 wt.-% to about 40 wt.-%, preferably about 15 w% to about 30 w%. Furthermore or in addition, the plastic feedstock fed into step (a) as a part of a reaction mixture in step (a) may be in the form of a powder after the respective pretreatment.

In certain embodiments, the process further comprises step (c) encompassing:
(c1) separating an output slurry of a mixture of molecular fragments of step (a) and/or a product mixture of step (b) into a liquid phase and a solid phase;
(c2) distilling a mixture of molecular fragments of step (a) and/or a product mixture of step (b) into a distillate comprising at least a C2 carboxylic acid in the form of acetic acid and bottom product(s); and/or
(c3) separating a mixture of molecular fragments of step (a) or a product mixture of step (b) independently comprising a carboxylic acid having a number of carbon atoms selected from the range of 4-12, optionally 4-6, from the mixture of molecular fragments of step (a) and/or the product mixture of step (b), optionally liquid-liquid separation or recrystallisation.

In step (c1), a mixture of molecular fragments of step (a) might be obtained as a slurry. The slurry may be separated into a liquid phase and a solid phase by common techniques such as distillation, filtration or extraction. The main component of the slurry may be liquid, but solid particles comprising unreacted polymers, not fully reacted polymeric material, or inerts/filler may also be present. Either of these separation techniques can be realized by any known method or device. A liquid phase which can be separated might comprise acetic acid and water. In particular embodiments, traces of by product such as acetone, formic acid, methylacetate and/or HCl (in case of PVC in the plastic feedstock) may be present. A solid phase which is obtained in step (c1) from the slurry mixture of molecular fragments might comprise oligomers and unreacted polymers as well as inerts.

The product mixture of step (b) might, in addition or alternatively, also be separated into a liquid phase, containing acetic acid, succinic acid, glutaric acid, adipic acid, benzoic acid, and terephthalic acid, and a solid phase in step (c1) by the techniques described above for the separation of the mixture of molecular fragments of step (a). Preferably only the product mixture of (b) is separated in step (c1).

In the case of a distillation, i.e. in step (c2), the mixture of molecular fragments of step (a) may be separated into a distillate comprising at least a C2 carboxylic acid in the form of acetic acid and bottom products separated thereof. The distillation can be realized by known methods and devices. The bottom products may be identical to the solid defined above. The at least C2 carboxylic acid in the form of acetic acid may be present in a content of about 60 w% to about 70 w% with respect to the mixture of molecular fragments in step (a) or the product mixture in step (b).

The same applies to the distillation of the product mixture (c2), which can alternatively or in addition, be carried out. Preferably, only a distillation of the product mixture is carried out in step (c2).

Step (c3) can be carried out for the product mixture of step (b), preferably only for this product mixture. Alternatively or in addition, step (c3) can be carried out for the product mixture of molecular fragments in step (a). In any of these cases, a sub-product mixture/sub-mixture of molecular fragments comprising a carboxylic acid with carbon atoms selected from the range of 4-12, optionally 4-6, is separated from the mixture of molecular fragments of step (a) and/or the product mixture of step (b). This can be done by liquid-liquid separation or recrystallization which can either be realized by known methods and devices.

Each of these steps can be performed independently from each other. Therefore, in preferred embodiments, only step (c1) is performed. In alternative preferred embodiments, only step (c2) is performed. In further alternative preferred embodiments, only step (c3) is performed. However, in other preferred embodiments, steps (c1), (c2), and (c3) are performed in the numbered sequence. Alternatively, steps (c1) and (c2) can be performed in this sequence without step (c3). Furthermore, steps (c1) and (c3) can be performed in this sequence without step (c2). Furthermore, steps (c2) and (c3) can be performed in this sequence without step (c1). In particular, any product of the separation of any steps (c1), (c2), and/or (c3), if carried out for the mixture of molecular fragments in (a), can be used as an input for the further conversion in step (b).

The embodiments denoted as "in certain embodiments" are combinable with other embodiments denoted with "in certain embodiments".

### Detailed Figure Description

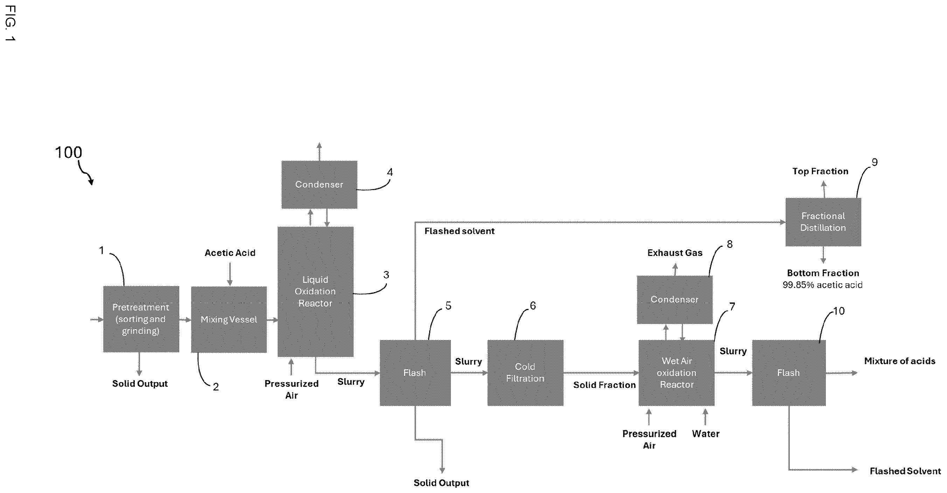

Figure 1 shows an high-level illustration of an implementation of the process according to the present invention on a chemical plant 100. In particular, a plastic feedstock, being mixed plastic waste, is subjected to a pretreatment unit 1 for sorting and grinding. Solid output which will not be used for the further process is discarded at this stage. Next, the sorted and ground plastic feedstock is subjected to a mixing vessel 2 where the sorted and ground plastic feedstock is mixed with the solvent, in this case acetic acid, for step (a). The first reactor unit, in this case in the form of a liquid oxidation reactor 3, is fed with the mixture of plastic feedstock and acetic acid and with pressurized air. Downstream of the liquid oxidation reactor 3 is a first condenser 4 where volatile products are separated. Additionally, exhaust gas leaves the first condenser 4. A slurry leaving the bottom of the liquid oxidation reactor 3 is subjected to a flash where three downstream products are produced. The slurry may contain the mixture of molecular fragments resulting from step (a). A solid output; a flashed solvent which is subjected to fractional distillation 9 to yield acetic acid as the bottom fraction and a top fraction; and a slurry which is subjected to cold filtration 6. The solid fraction obtained from cold filtration, e.g. comprising oligomers, such as long-chain carboxylic acids, is subjected to the second reactor unit, such as a wet air oxidation reactor 7, where step (b) is performed. Pressurized air and water are fed into the reactor again. A second condenser 8 is used for condensing volatile products. Also a slurry leaves the wet air oxidation reactor 7 and is subjected to a flash 10 where the streams of both a flashed solvent and a product mixture of step (b) are obtained.

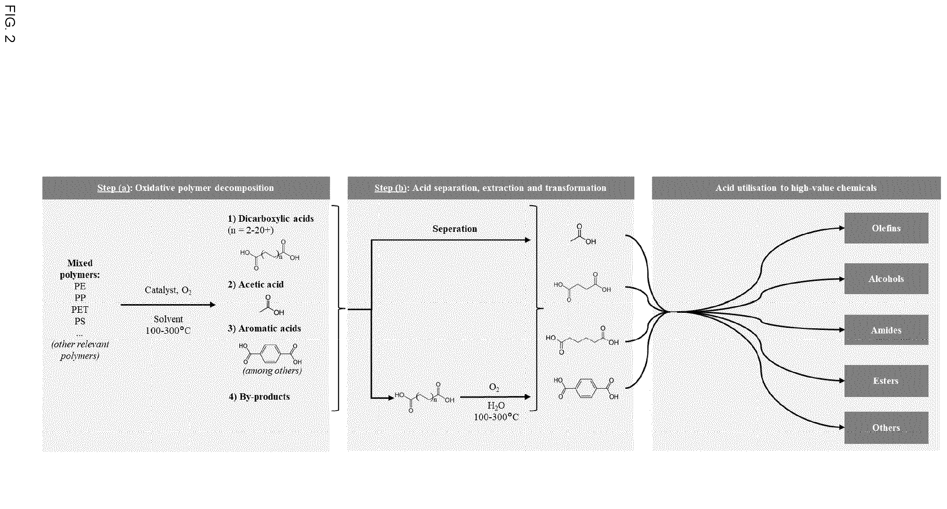

Figure 2 is an illustration of chemical species which can potentially result from the respective process steps (a) and (b) of the process according to the present invention. Also exemplified but non-limiting process conditions and process steps are shown and potential acid utilizations of the products in step (b) for obtaining high value chemicals such as olefins, alcohols, amides, esters or other products by processes known to the skilled person. In Figure 2 the path of decompositions of mixed polymers in step (a) to long-chain dicarboxylic acids and smaller product molecules such as acetic acid, aromatic acids and by products are shown. The smaller product molecules are separated, while the long-chain carboxylic acid are converted to these small product molecules under the conditions indicated in step (b).

### Examples

**The following** examples illustrate specific embodiments of implementing the present invention as claimed.

### Step (a): Oxidative Polymer Decomposition

Step (a) according to the present invention is exemplified herein as follows. A typical experiment consisted of filling a 300-mL Hastelloy Parr reactor with 70-100 mL of glacial acetic acid, followed by the addition of cobalt (II) acetate, manganese (II) acetate, sodium bromide, and the polymer substrate. For experiments performed with batch gas phase, after the addition of all reactants, the reactor was filled with 38 bar of air and 47 bar of nitrogen. For experiments with continuous gas flow, 200 ml/min nitrogen and 150 ml/min air were continuously fed into the reactor via mass flow controllers and a back pressure regulator was used to keep 30 bar pressure. A reflux condenser maintained acetic acid in the reactor under reflux. Partial oxygen concentration was determined using flammability limits (LOC (limiting oxygen concentration), LEL (lower explosion limit), UEL (upper explosion limit) and calculations of the headspace composition using Antione equation parameters to ensure experiment was carried out under safe conditions. Reactors were then heated to the desired temperatures for the desired duration. Reaction times listed in this work include the 20 minutes that it takes to reach the desired temperature. Upon completion, reactors were placed on ice and cooled to ~20 °C, after which they were depressurized, and reaction solutions were collected for analysis. Gas samples for GC analysis were either taken during continuous flow after the back pressure regulator or at the end of the reaction upon depressurisation. Product mixtures directly from the catalytic reactions were filtered, liquid and solid fractions were dried and taken for elemental analysis. GC analysis of the resulting solids was performed following butylation via BF3/butanol using the following protocol. The acid mixture was suspended in n-butanol and spiked with 50µL of BF3 solution (10%) in n-butanol. The reaction took place at 60 °C for 60 min. When the samples cooled down, the internal standard tert-butylbenzene in n-heptane (100µL of 7,5 mg/ml stock solution) was added. 0.5mL of water saturated with NaCl was then added into the reaction mixture. Butyl esters were 3 times extracted with n-heptane (3x500µL). The fractions were combined, and the resulting n-heptane solution was filtered through glass wool and anhydrous MgSO4 to remove residual water. The resulting sample was submitted for gas chromatography to determine concentrations of acids <C20. Solids containing oligomers and DCA were separated via Soxhlet extraction with acetic acid.

**Table 1: Overview of reaction conditions and results of experiments according to step (a)**

| # | **Gas phase (Batch / continuous flow)** | **Polymer** | **Polymer Loading** | **Solvent** | **Catalyst System** | **Catalyst Loading** | **Temperature** | **Total Pressure** | **Partial oxygenpressure** | **Oxygen Eq.** | **Time** | **Carbon Yield¹** | **Species obtained** |
|---|---|---|---|---|---|---|---|---|---|---|---|---|---|
| | | | | | | | **°*C*** | | | | ***h*** | | |
| | | | **w%** | | | ***mol %*** | | ***bar*** | **p_{O2}** | | | | |
| | | | | | | | | | *bar* | | | | |
| 1.1 | Batch | PE | 1% | AcOH | Co/Mn/Br | 0.3/0.3/0.6 | 160 | 85 | 8 | 1.8 | 2 | 49% | DCA² |
| 1.2 | Batch | PP | 1% | AcOH | Co/Mn/Br | 0.3/0.3/0.6 | 160 | 85 | 8 | 1.7 | 2 | 45% | DCA² |
| 1.3 | Batch | PE | 10% | AcOH | Co/Mn/Br | 0.3/0.3/0.6 | 160 | 85 | 8 | 0.2 | 2 | >95% | Oligomers (> C20)³ |
| 1.4 | Batch | PP | 10% | AcOH | Co/Mn/Br | 0.3/0.3/0.6 | 160 | 85 | 8 | 0.1 | 2 | >95% | Oligomers (> C20)³ |
| 1.5 | Batch | PS | 10% | AcOH | Co/Mn/Br | 0.3/0.3/0.6 | 160 | 85 | 8 | 0.3 | 2 | >95% | Oligomers (> C20)³ |
| 1.6 | Flow | PE | 10% | AcOH | Co/Mn/Br | 0.3/0.3/0.6 | 180 | 30 | 2.7 | 1.5 | 2 | >95% | ~65% Oligomers (> C20)³, ~35% DCA & acetic acid |
| 1.7 | Flow | PE/PP/PS (1:1:1) | 10% | AcOH | Co/Mn/Br | 0.3/0.3/0.6 | 180 | 30 | 2.7 | 1.5 | 2 | >95% | ~65% Oligomers (> C20)³, ~35% DCA & acetic acid |

| | | | | | | | | | | | | | |
|---|---|---|---|---|---|---|---|---|---|---|---|---|---|
| (1) Yield is calculated based on elemental analysis of remaining solid. (2) DCA = dicarboxylic acids C4-C20. (3) The oligomers are polymeric fragments with lower molecular mass than the initial polymers. | | | | | | | | | | | | | |

### Step (b): Wet Air Oxidation

Step (b) according to the present invention is exemplified herein as follows. A typical experiment consisted of filling a 300-mL 316 stainless Steel Parr reactor with 100 mL of water, followed by the addition of the oligomer substrate or the dicarboxylic acids. After the addition of all reactants, the reactor was filled with 50 bars of air. Reactors were then heated to the desired temperatures for the desired duration. Reaction times listed in this work include the 20 minutes that it takes to reach the desired temperature. Upon completion, reactors were placed on ice and cooled to ~20 °C, after which they were depressurized, and reaction solutions were collected for analysis. Product mixtures directly from the reactions were evaporated, solid fractions were dried and taken for elemental analysis. Liquid fractions were titrated to determine acetic acid concentration. Butyl esters of organic acids found in the solid fraction were formed upon the reaction with BF3/butanol using the same protocol as mentioned in step (a).

**Table 2: Overview of reaction conditions and results of experiments according to step (b)**

| | **starting material / DCA¹** | **DCA Loading (w%)** | **Solvent** | **Temperature (°C)** | **Pressure (bar)** | **Partial oxygen pressure** | **Time (h)** | **Carbon Yield²** | **Species** |
|---|---|---|---|---|---|---|---|---|---|
| | | | | | | **p_{O2} (bar)** | | | |
| **2.** 1 | 1.1 | 0.25% | Water | 220 | 50 | 10 | 2 | 41% | DCA³, C2 |
| 2. 2 | 1.2 | 0.25% | Water | 220 | 50 | 10 | 2 | 33% | DCA³, C2 |
| 2. 3 | 1.6 (oligomer fraction) | 0.25% | Water | 220 | 50 | 10 | 2 | 64% | DCA³, C2 |
| 2. 4 | 1.7 (oligomer fraction) | 0.25% | Water | 220 | 50 | 10 | 2 | 61% | DCA³, C2 |
| 2. 5 | C18 | 0.25% | Water | 220 | 50 | 10 | 2 | 42% | C6, C5, C4, C2 |
| 2. 6 | C6 | 0.25% | Water | 220 | 50 | 10 | 2 | 62% | C6, C2 |
| 2. 7 | C4 | 0.25% | Water | 220 | 50 | 10 | 2 | 94% | C4 |
| 2. 8 | C2 | 0.25% | Water | 220 | 50 | 10 | 2 | 98% | C2 |

| | | | | | | | | | |
|---|---|---|---|---|---|---|---|---|---|
| (1) DCA = dicarboxylic acids from step (a); C2 = acetic acid; C4 = succinic acid; C5 = glutaric acid; C6 = adipic acid; C18 = Octadecanedioic acid (2) combined yield from different species (3) DCA = dicarboxylic acids C2-C12. Reactions have been performed non-catalytically. | | | | | | | | | |

In the above tables it can be shown that due to the combinations of steps (a) and (b) plastic wastes of different polymeric compositions can be converted to precursors of high value chemicals, such as C2, C4, C5 and C6 with high carbon yield. The process is feedstock agnostic. Also experiments 2.5 to 2.8 show that the second step (b) does not essentially break down short chain DCA.

## Claims

1. A process for the conversion of a plastic feedstock, the process comprising the following steps:
(a) decomposing the plastic feedstock by catalytic oxidation to obtain a mixture of molecular fragments of the plastic feedstock in a first reactor unit, wherein the catalytic oxidation involves a catalyst, the catalyst comprising a transition metal salt, comprising cobalt, , zirconium and/or manganese; wherein the catalyst further contains bromide, wherein step (a) is carried out in a solvent consisting of acetic acid, and wherein step (a) comprises an oxidation agent, the oxidation agent being selectec from the group consisting of air, oxygen, hydrogen peroxide, nitric acid, nitrous oxide, ozone or combinations thereof; and
(b) converting at least a portion of the mixture of molecular fragments obtained in step (a) by a further oxidation in a solvent consisting of water and above atmospheric pressure in a second reactor unit to obtain a product mixture comprising at least one carboxylic acid having a number of carbon atoms selected from the range of 2-12, wherein the at least one carboxylic acid is selected from the group consisting of acetic acid, succinic acid, benzoic acid, terephthalic acid, glutaric acid adipic acid or combinations thereof, wherein step (b) is carried out at a temperature ranging from about 180 °C to about 300°C, and wherein the term about has the meaning of a tolerance range of ± 10%.

2. The process according to claim 1, wherein step (b) comprises an oxidation agent, the oxidation agent being selected from the group consisting of air, oxygen, hydrogen peroxide, nitric acid, nitrous oxide, ozone or combinations thereof.

3. The process according to any of the preceding claims, wherein the plastic feedstock comprises polyethylene, polypropylene, polyethylene terephthalate (PET), acrylonitrile butadiene styrene (ABS), poly(vinylidene chloride), polystyrene, polyurethane, polycarbonate, polyamide, synthetic rubber, polyethylene naphthalate, polyolefin, polybutylene terephthalate, any synthetic polymeric material, any copolymers thereof, or any combination thereof.

4. The process according to any of the preceding claims, wherein step (a) is carried out at a temperature ranging from about 100 °C to about 300 °C, optionally from about 150 °C to about 220 °C, and/or wherein step (a) is carried out at a pressure ranging from about 5 bar to about 100 bar, wherein the term about has the meaning of a tolerance range of ± 10%.

5. The process according to any of the preceding claims, wherein step (b) is operated at a pressure ranging from about 5 bar to about 100 bar, wherein the term about has the meaning of a tolerance range of ± 10%.

6. The process according to any of the preceding claims, wherein the mixture molecular fragments comprise at least one oligomer, or at least one carboxylic acid having a number of carbon atoms selected from the range of 2-22 or combinations thereof.

7. The process according to any one of the preceding claims further comprising the step of recycling at least a portion of a newly produced chemical output in the first reactor unit in step (a) from a downstream unit of the first reactor unit in step (a) and/or step (b) as a solvent back into step (a) to substitute a solvent depleted in step (a) or (b), the portion optionally comprising from about 1 w% to about 10 w.-% of the consumed solvent with respect to a total mass of an input into the first reactor unit in step (a), wherein the term about has the meaning of a tolerance range of ± 10%..

8. The process according to any one of the preceding claims, wherein step (a) comprises an inert gas being selected from the group consisting of carbon dioxide, nitrogen or a combination thereof.

9. The process according to any of the preceding claims, wherein the residence time in step (a) and/or step (b) is ranging from about 15 minutes to about 3 hours, wherein the term about has the meaning of a tolerance range of ± 10%.

10. The process according to any of the preceding claims, wherein the plastic feedstock is contained in a reaction mixture, wherein weight percentage of the plastic feedstock with respect to the total mass of the reaction mixture is ranging from about 0.5 wt.-% to about 40 wt.-%, wherein the term about has the meaning of a tolerance range of ± 10%.

11. The process according to any of the preceding claims, further comprising step (c) encompassing:
(c1) separating an output slurry of a mixture of molecular fragments of step (a) and/or a product mixture of step (b) into a liquid phase and a solid phase;
(c2) distilling a mixture of molecular fragments of step (a) and/or a product mixture of step (b) into a distillate comprising at least a C2 carboxylic acid in the form of acetic acid and bottom product(s); and/or
(c3) separating a mixture of molecular fragments of step (a) or a product mixture of step (b) independently comprising a carboxylic acid having a number of carbon atoms selected from the range of 4-12, optionally 4-6, from the mixture of molecular fragments of step (a) and/or the product mixture of step (b), optionally liquid-liquid separation or recrystallisation.

## Patentansprüche

1. Verfahren zur Umwandlung eines Kunststoff-Ausgangsmaterials, wobei das Verfahren die folgenden Schritte umfasst:
(a) Zersetzen des Kunststoff-Ausgangsmaterials durch katalytische Oxidation, um ein Gemisch molekularer Fragmente des Kunststoff-Ausgangsmaterials in einer ersten Reaktoreinheit zu erhalten, wobei die katalytische Oxidation einen Katalysator einbezieht, wobei der Katalysator ein Übergangsmetallsalz umfasst, das Kobalt, Zirconium und/oder Mangan umfasst; wobei der Katalysator ferner Bromid enthält, wobei Schritt (a) in einem Lösungsmittel durchgeführt wird, das aus Essigsäure besteht, und wobei Schritt (a) ein Oxidationsmittel umfasst, wobei das Oxidationsmittel ausgewählt ist aus der Gruppe bestehend aus Luft, Sauerstoff, Wasserstoffperoxid, Salpetersäure, Distickstoffmonoxid, Ozon oder Kombinationen davon; und
(b) Umwandeln zumindest eines Teils des in Schritt (a) erhaltenen Gemischs molekularer Fragmente durch eine weitere Oxidation in einem Lösungsmittel, das aus Wasser besteht, und bei einem über Atmosphärendruck liegenden Druck in einer zweiten Reaktoreinheit, um ein Produktgemisch zu erhalten, das mindestens eine Carbonsäure mit einer Anzahl von Kohlenstoffatomen umfasst, die aus dem Bereich von 2-12 ausgewählt ist, wobei die mindestens eine Carbonsäure ausgewählt ist aus der Gruppe bestehend aus Essigsäure, Bernsteinsäure, Benzoesäure, Terephthalsäure, Glutarsäure, Adipinsäure oder Kombinationen davon, wobei Schritt (b) bei einer Temperatur im Bereich von etwa 180 °C bis etwa 300 °C durchgeführt wird, und wobei der Begriff "etwa" die Bedeutung eines Toleranzbereichs von ± 10 % hat.

2. Verfahren nach Anspruch 1, wobei Schritt (b) ein Oxidationsmittel umfasst, wobei das Oxidationsmittel ausgewählt ist aus der Gruppe bestehend aus Luft, Sauerstoff, Wasserstoffperoxid, Salpetersäure, Distickstoffmonoxid, Ozon oder Kombinationen davon.

3. Verfahren nach einem der vorhergehenden Ansprüche, wobei das Kunststoff-Ausgangsmaterial Polyethylen, Polypropylen, Polyethylenterephthalat (PET), Acrylnitril-Butadien-Styrol (ABS), Poly(vinylidenchlorid), Polystyrol, Polyurethan, Polycarbonat, Polyamid, Synthesekautschuk, Polyethylennaphthalat, Polyolefin, Polybutylenterephthalat, ein beliebiges synthetisches polymeres Material, beliebige Copolymere davon oder eine beliebige Kombination davon umfasst.

4. Verfahren nach einem der vorhergehenden Ansprüche, wobei Schritt (a) bei einer Temperatur im Bereich von etwa 100 °C bis etwa 300 °C, optional von etwa 150 °C bis etwa 220 °C, durchgeführt wird und/oder wobei Schritt (a) bei einem Druck im Bereich von etwa 5 bar bis etwa 100 bar durchgeführt wird, wobei der Begriff "etwa" die Bedeutung eines Toleranzbereichs von ± 10 % hat.

5. Verfahren nach einem der vorhergehenden Ansprüche, wobei Schritt (b) bei einem Druck im Bereich von etwa 5 bar bis etwa 100 bar betrieben wird, wobei der Begriff "etwa" die Bedeutung eines Toleranzbereichs von ± 10 % hat.

6. Verfahren nach einem der vorhergehenden Ansprüche, wobei das Gemisch molekularer Fragmente mindestens ein Oligomer oder mindestens eine Carbonsäure mit einer Anzahl von Kohlenstoffatomen umfasst, die aus dem Bereich von 2-22 ausgewählt ist, oder Kombinationen davon.

7. Verfahren nach einem der vorhergehenden Ansprüche, ferner umfassend den Schritt des Rückführens zumindest eines Teils eines neu erzeugten chemischen Outputs in die erste Reaktoreinheit in Schritt (a) aus einer stromabwärts der ersten Reaktoreinheit in Schritt (a) angeordneten Einheit und/oder aus Schritt (b) als Lösungsmittel zurück in Schritt (a), um ein in Schritt (a) oder (b) verbrauchtes Lösungsmittel zu ersetzen, wobei der Teil optional etwa 1 Gew.-% bis etwa 10 Gew.% des verbrauchten Lösungsmittels, bezogen auf eine Gesamtmasse eines Inputs in die erste Reaktoreinheit in Schritt (a), umfasst, wobei der Begriff "etwa" die Bedeutung eines Toleranzbereichs von ± 10 % hat.

8. Verfahren nach einem der vorhergehenden Ansprüche, wobei Schritt (a) ein Inertgas umfasst, das ausgewählt ist aus der Gruppe bestehend aus Kohlendioxid, Stickstoff oder einer Kombination davon.

9. Verfahren nach einem der vorhergehenden Ansprüche, wobei die Verweilzeit in Schritt (a) und/oder Schritt (b) im Bereich von etwa 15 Minuten bis etwa 3 Stunden liegt, wobei der Begriff "etwa" die Bedeutung eines Toleranzbereichs von ± 10 % hat.

10. Verfahren nach einem der vorhergehenden Ansprüche, wobei das Kunststoff-Ausgangsmaterial in einem Reaktionsgemisch enthalten ist, wobei der Gewichtsanteil des Kunststoff-Ausgangsmaterials bezogen auf die Gesamtmasse des Reaktionsgemischs im Bereich von etwa 0,5 Gew.-% bis etwa 40 Gew.-% liegt, wobei der Begriff "etwa" die Bedeutung eines Toleranzbereichs von ± 10 % hat.

11. Verfahren nach einem der vorhergehenden Ansprüche, ferner umfassend Schritt (c), der umfasst:
(c1) Trennen einer Output-Aufschlämmung eines Gemischs molekularer Fragmente aus Schritt (a) und/oder eines Produktgemischs aus Schritt (b) in eine flüssige Phase und eine feste Phase;
(c2) Destillieren eines Gemischs molekularer Fragmente aus Schritt (a) und/oder eines Produktgemischs aus Schritt (b) zu einem Destillat, das mindestens eine C2-Carbonsäure in Form von Essigsäure umfasst, und zu Sumpfprodukt(en); und/oder
(c3) Abtrennen einer Carbonsäure, die eine Anzahl von Kohlenstoffatomen umfasst, die aus dem Bereich von 4-12, optional 4-6, ausgewählt ist, aus einem Gemisch molekularer Fragmente aus Schritt (a) oder einem Produktgemisch aus Schritt (b), wobei das Gemisch molekularer Fragmente aus Schritt (a) und/oder das Produktgemisch aus Schritt (b) jeweils unabhängig die Carbonsäure umfasst, optional mittels Flüssig-Flüssig-Trennung oder Rekristallisation.

## Revendications

1. Procédé de conversion d'une charge d'alimentation plastique, le procédé comprenant les étapes suivantes :
(a) décomposer la charge d'alimentation plastique par oxydation catalytique afin d'obtenir un mélange de fragments moléculaires de la charge d'alimentation plastique dans une première unité de réacteur, dans lequel l'oxydation catalytique met en œuvre un catalyseur, le catalyseur comprenant un sel de métal de transition comprenant du cobalt, du zirconium et/ou du manganèse ; dans lequel le catalyseur contient en outre du bromure, dans lequel l'étape (a) est réalisée dans un solvant consistant en de l'acide acétique, et dans lequel l'étape (a) comprend un agent oxydant, l'agent oxydant étant choisi dans le groupe constitué par l'air, l'oxygène, le peroxyde d'hydrogène, l'acide nitrique, l'oxyde nitreux, l'ozone ou des combinaisons de ceux-ci ; et
(b) convertir au moins une partie du mélange de fragments moléculaires obtenu à l'étape (a) par une oxydation supplémentaire dans un solvant consistant en de l'eau et à une pression supérieure à la pression atmosphérique dans une seconde unité de réacteur afin d'obtenir un mélange de produits comprenant au moins un acide carboxylique ayant un nombre d'atomes de carbone choisi dans la plage de 2 à 12, dans lequel ledit au moins un acide carboxylique est choisi dans le groupe constitué par l'acide acétique, l'acide succinique, l'acide benzoïque, l'acide téréphtalique, l'acide glutarique, l'acide adipique ou des combinaisons de ceux-ci, dans lequel l'étape (b) est réalisée à une température allant d'environ 180 °C à environ 300 °C, et dans lequel le terme « environ » a la signification d'une plage de tolérance de ± 10 %.

2. Procédé selon la revendication 1, dans lequel l'étape (b) comprend un agent oxydant, l'agent oxydant étant choisi dans le groupe constitué par l'air, l'oxygène, le peroxyde d'hydrogène, l'acide nitrique, l'oxyde nitreux, l'ozone ou des combinaisons de ceux-ci.

3. Procédé selon l'une quelconque des revendications précédentes, dans lequel la charge d'alimentation plastique comprend du polyéthylène, du polypropylène, du polyéthylène téréphtalate (PET), de l'acrylonitrile-butadiène-styrène (ABS), du poly(chlorure de vinylidène), du polystyrène, du polyuréthane, du polycarbonate, du polyamide, du caoutchouc synthétique, du polyéthylène naphtalate, une polyoléfine, du polybutylène téréphtalate, tout matériau polymère synthétique, tout copolymère de ceux-ci, ou toute combinaison de ceux-ci.

4. Procédé selon l'une quelconque des revendications précédentes, dans lequel l'étape (a) est réalisée à une température allant d'environ 100 °C à environ 300 °C, éventuellement d'environ 150 °C à environ 220 °C, et/ou dans lequel l'étape (a) est réalisée à une pression allant d'environ 5 bar à environ 100 bar, dans lequel le terme « environ » a la signification d'une plage de tolérance de ± 10 %.

5. Procédé selon l'une quelconque des revendications précédentes, dans lequel l'étape (b) est opérée à une pression allant d'environ 5 bar à environ 100 bar, dans lequel le terme « environ » a la signification d'une plage de tolérance de ± 10 %.

6. Procédé selon l'une quelconque des revendications précédentes, dans lequel le mélange de fragments moléculaires comprend au moins un oligomère, ou au moins un acide carboxylique ayant un nombre d'atomes de carbone choisi dans la plage de 2 à 22, ou des combinaisons de ceux-ci.

7. Procédé selon l'une quelconque des revendications précédentes, comprenant en outre l'étape de recyclage d'au moins une partie d'une sortie chimique nouvellement produite dans la première unité de réacteur à l'étape (a), provenant d'une unité située en aval de la première unité de réacteur à l'étape (a) et/ou de l'étape (b), en tant que solvant de retour vers l'étape (a), afin de remplacer un solvant consommé à l'étape (a) ou (b), ladite partie comprenant éventuellement d'environ 1 % en poids à environ 10 % en poids du solvant consommé, par rapport à une masse totale d'une entrée dans la première unité de réacteur à l'étape (a), dans lequel le terme « environ » a la signification d'une plage de tolérance de ± 10 %.

8. Procédé selon l'une quelconque des revendications précédentes, dans lequel l'étape (a) comprend un gaz inerte choisi dans le groupe constitué par le dioxyde de carbone, l'azote ou une combinaison de ceux-ci.

9. Procédé selon l'une quelconque des revendications précédentes, dans lequel le temps de séjour à l'étape (a) et/ou à l'étape (b) est compris entre environ 15 minutes et environ 3 heures, dans lequel le terme « environ » a la signification d'une plage de tolérance de ± 10 %.

10. Procédé selon l'une quelconque des revendications précédentes, dans lequel la charge d'alimentation plastique est contenue dans un mélange réactionnel, dans lequel le pourcentage en poids de la charge d'alimentation plastique par rapport à la masse totale du mélange réactionnel est compris entre environ 0,5 % en poids et environ 40 % en poids, dans lequel le terme « environ » a la signification d'une plage de tolérance de ± 10 %.

11. Procédé selon l'une quelconque des revendications précédentes, comprenant en outre une étape (c) englobant :
(c1) séparer une suspension de sortie d'un mélange de fragments moléculaires de l'étape (a) et/ou d'un mélange de produits de l'étape (b) en une phase liquide et une phase solide ;
(c2) distiller un mélange de fragments moléculaires de l'étape (a) et/ou un mélange de produits de l'étape (b) en un distillat comprenant au moins un acide carboxylique en C2 sous la forme d'acide acétique et en produit(s) de fond ; et/ou
(c3) séparer, à partir d'un mélange de fragments moléculaires de l'étape (a) ou d'un mélange de produits de l'étape (b), comprenant indépendamment un acide carboxylique ayant un nombre d'atomes de carbone choisi dans la plage de 4 à 12, éventuellement de 4 à 6, ledit acide carboxylique du mélange de fragments moléculaires de l'étape (a) et/ou du mélange de produits de l'étape (b), éventuellement par séparation liquide-liquide ou recristallisation.
